# EUROPEAN PATENT APPLICATION

(11) **EP 2 326 040 A2**
(43) Date of publication of application: **25.05.2011**
(21) Application number: 10191746.6
(22) Date of filing: 18.11.2010
(51) Int. Cl.: H04L 5/00, H04L 27/26

(54) **Relay device, base station device, mobile station device, and relay method**

(30) Priority: 18.11.2009 JP 2009263213
(71) Applicant: Fujitsu Limited, Kawasaki-shi, Kanagawa 211-8588 (JP)
(72) Inventor: Kawasaki, Toshio, Kawasaki-shi Kanagawa 211-8588 (JP)
(74) Representative: Holz, Ulrike

(57) **Abstract**

A relay device includes a first receiving unit which receives an Orthogonal Frequency Division Multiple Access (OFDMA) signal in a first frequency band, a detection unit which detects, from the OFDMA signal, a signal of a second frequency band that is included in the first frequency band and narrower than the first frequency band, a frequency transformation unit which transforms the second frequency band of the detected signal into a frequency band that is not included in the second frequency band, and a first transmitting unit which transmits the detected signal that is transformed by the frequency transformation unit.

## Description

### CROSS-REFERENCE TO RELATED APPLICATION

This application is based upon and claims the benefit of priority of the prior Japanese Patent Application No. 2009-263213, filed on November 18, 2009, the entire contents of which are incorporated herein by reference.

### FIELD

Embodiments discussed herein are related to a relay method of a radio signal, a relay device, a base station device, and a mobile station device to which a transmission signal is relayed by the relay method and the relay device.

### BACKGROUND

In a filed of radio communication, a relay method for relaying a radio communication between a base station device and a mobile station device by using a relay device has been in practical use. A booster device that does not perform a regenerative relay is an example of the relay device.

A frequency transformation relay device that has different frequencies of a transmission-reception channel for a base station and of a transmission-reception channel for a mobile station has been proposed. The frequency transformation relay device includes a downlink relay amplifier, an uplink relay amplifier, first, second, third, fourth synthesizer local oscillators, a ROM, a RAM, and a micro processor.

After reception signals from the base station are mixed by a first mixer and are selected and amplified by a band filter and an amplifier of a certain central frequency, the reception signals are transformed by a second mixer into a frequency of a wave to be transmitted to a mobile station in a service area of the relay device, and are then output. After mixing the reception signals from the mobile station by a third mixer and are selected and amplified by the band filter and the amplifier of the certain central frequency, the reception signals are transformed by a fourth mixer into the frequency of the wave transmitted to the base station having a frequency different from the frequency of the reception signal, and are then output. The first, second, third, and fourth synthesizer local oscillators transmit oscillation signals to the first, second, third, and fourth mixers, respectively. The ROM stores a control program for controlling and setting an oscillation frequency of the first, second, third, and fourth synthesizer local oscillators. In the RAM, a transmission channel number of a frequency to a mobile station to be transformed according to a reception channel number or a frequency of a downlink from a base station, and the transmission channel number or the frequency to the base station to be transformed according to the reception channel number or the frequency of the downlink from the mobile station are written.

When a channel number or a frequency before and after being transformed is instructed and input by an external transformation frequency setting input device, the micro processor writes, into the RAM, the channel number or the frequency before and after being transformed, and controls and sets in such a way that an oscillation frequency of the first, second, third, and fourth synthesizer local oscillators corresponds to the channel number or the frequency written in the RAM according to the control program of the ROM. If the channel number or frequency before and after transformation which are instructed and input by the external transformation frequency setting input device is substantially equal to or less than a prescribed interval, the micro processor discards the instruction input and transmits an error message to the external transformation frequency setting input device. On the other hand, if the channel number or frequency before and after transformation which are instructed and input is larger than the prescribed interval, the micro processor writes the instruction input into the RAM, and controls and sets, according to the control program of the ROM, in such a way that the oscillation frequencies of the first, second, third, fourth synthesizer oscillators are set to be oscillation frequencies corresponding to the channel member and the frequency written in the RAM.

There is a proposal of a repeater device that improves a radio wave environment in a closed space such as a room by power-amplifying a reception signal and retransmitting the reception signal as a radio signal. The repeater devices are classified as a device for a base station corresponding to a base station and as a device for a user terminal corresponding to a user terminal in the closed space. Signal transmission between the device for a base station and the device for a user terminal is performed by using a frequency that is unused or empty out of the frequency bands allocated to a target radio system.

Furthermore, a radio transceiver of a non-regenerative relay system has been proposed. The radio transceiver includes a reception filter unit, a first frequency transformation unit, a narrow-band pass filter unit, a second frequency transformation unit, and a transmitting unit. The reception filter unit includes a pass band through which a plurality of channel signals having different carrier frequencies are transmitted from a reception wave of a radio frequency band. The first frequency transformation unit transforms the plurality of channel signals into intermediate frequencies, respectively. For the plurality of channel signals of the intermediate frequency band, the narrow-band pass filter unit has a pass band that is narrower than the pass band of the reception filter unit to suppress the adjacent channel components. The second frequency transformation unit transforms the plurality of channel signals that was transmitted through the narrow-band pass filter into the radio frequency bands. The transmitting unit multiplexes the plurality of signals that was transformed into the radio frequency bands by the second transformation unit and generates a transmission wave.

There has been a proposal of a frequency shift system microwave direct relay method. In this method, a reception signal, which is lead from one of a pair of duplexers having a band pass filter and a circulator corresponding to each reception frequency, is frequency-transformed and is amplified to a desired level, and is then lead as a transmission signal to the other of the pair of duplexers. In this method, different frequencies of a main oscillator and an auxiliary oscillator as a local oscillator transmission source for frequency transformation added and subtracted by a frequency mixer are used to perform frequency modulation though a switch for selecting either anti-phase or in-phase with respect to the main oscillator and the auxiliary oscillator.

### SUMMARY

According to an aspect of the embodiments discussed herein, A relay device includes a first receiving unit which receives an Orthogonal Frequency Division Multiple Access (OFDMA) signal in a first frequency band, a detection unit which detects, from the OFDMA signal, a signal of a second frequency band that is included in the first frequency band and narrower than the first frequency band, a frequency transformation unit which transforms the second frequency band of the detected signal into a frequency band that is not included in the second frequency band, and a first transmitting unit which transmits the detected signal that is transformed by the frequency transformation unit.

It is to be understood that both the foregoing general description and the following detailed description are exemplary and explanatory and are not restrictive of the embodiments, as claimed.

### BRIEF DESCRIPTION OF DRAWINGS

FIG. 1 is a configuration diagram of a first embodiment of a radio communication system;
FIGs. 2A, 2B, and 2C are explanation diagrams of a frequency band used in the radio communication system illustrated in FIG. 1;
FIG. 3 is diagram illustrating a first configuration example of a base station device illustrated in FIG. 1;
FIG. 4 is a diagram illustrating a first configuration example of a relay device illustrated in FIG. 1;
FIG. 5 is a diagram illustrating a first configuration example of a detection unit and a frequency transformation unit illustrated in FIG. 4;
FIG. 6 is a diagram illustrating a second configuration example of a detection unit and a frequency transformation unit illustrated in FIG. 4;
FIG. 7 is a diagram illustrating a configuration example of a mapper illustrated in FIG. 6;
FIG. 8 is a diagram illustrating a configuration example of a mobile station device illustrated in FIG. 1;
FIG. 9 is an explanation diagram of an embodiment of frequency resource allocating processing performed by a base station device;
FIG. 10 is a diagram illustrating a second configuration example of a relay device illustrated in FIG. 1;
FIG. 11 is a diagram illustrating an example of a configuration for adding instruction information;
FIG. 12 is a diagram illustrating a configuration example of a relay detection unit;
FIG. 13 is a diagram illustrating a second configuration example of the base station device illustrated in FIG. 1;
FIG. 14 is a diagram illustrating a third configuration example of the relay device illustrated in FIG. 1;
FIG. 15 is a configuration diagram of a second embodiment of the radio communication system;
FIGs. 16A, 16B, and 16C are explanation diagrams of a frequency band used in the radio communication system illustrated in FIG. 15,
FIG. 17 is a configuration diagram of a third embodiment of the radio communication system;
FIG. 18 is a diagram illustrating a configuration example of a mobile station device illustrated in FIG. 17;
FIG. 19 is a diagram illustrating a configuration example of a base station device illustrated in FIG. 17; and
FIG. 20 is a configuration diagram of a fourth embodiment of the radio communication system.

### DESCRIPTION OF EMBODIMENTS

According to the relay method for transmitting the received radio signal by using substantially the same frequency, oscillation may occur because a reception antenna is combined with a transmission antenna. According to the relay method for transmitting the received radio wave after transforming the frequency of the received radio wave, another frequency band for transmitting a transmission signal is desired, so that frequencies occupied by the signals before and after the reply are increased.

The device and method according to the present embodiment are intended to reduce a frequency bandwidth, in which the signals before and after the relay are occupied, in the relay device and the relay method for transforming the frequency of the received radio signal and then transmitting the radio signal.

According to the disclosed device and method, the frequency bandwidth in which the radio signals before and after the relay are occupied is reduced in the relay device and the relay method.

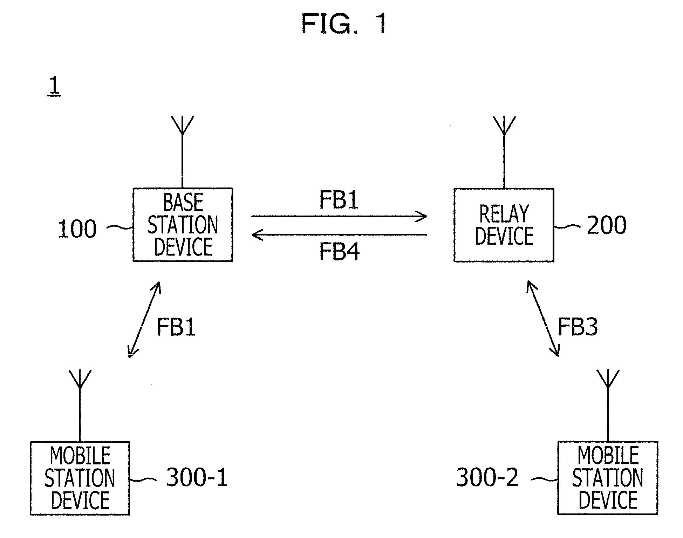

FIG.1 is a configuration diagram of a first embodiment of a radio communication system. A radio communication system 1 includes a base station device 100, mobile station devices 300-1 and 300-2, and a relay device 200. The mobile station devices 300-1 and 300-2 may be collectively referred to as a mobile station device 300. For example, the mobile station device 300 is a cellular or mobile phone. The radio communication system 1 employs at least an OFDMA as a radio access system of the downlink. Following other embodiments of the radio communication system 1 employ the OFDMA as well.

The mobile station device 300-2 exists in a cover area of the relay device 200. The relay device 200 relays a radio communication between the mobile station device 300-2 and the base station device 100. On the other hand, the mobile station device 300-1 performs a radio communication with the base station device 100 without via the relay device 200.

The radio communication between the mobile station device 300-1 and the base station device 100 uses a frequency band FB1. The radio communication of the downlink between the relay device 200 and the base station device 100 uses the frequency band FB1, On the other hand, the radio communication between the relay device 200 and the mobile station device 300-2 uses a frequency band FB3 having a bandwidth that is narrower than the bandwidth of the frequency band FB1.

The relay device 200 transforms an uplink signal (in the frequency band FB3) transmitted from the mobile station device 300-2 into a frequency band FB4 having a central frequency that is different from the central frequency of the frequency band FB3 during reception, and transmits the uplink signal to the base station device 100.

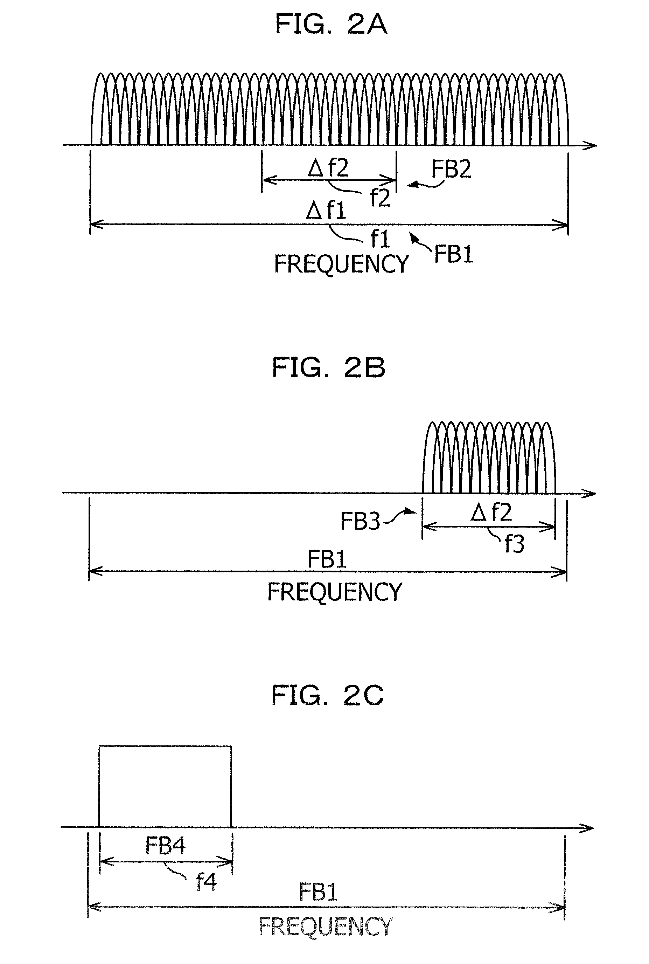

FIG. 2A is an explanation diagram of a frequency band used by the OFDMA signal of the downlink transmitted from the base station device 100. The downlink signal transmitted from the base station device 100 is transmitted by using the frequency band FB1 as a system band. A carrier frequency, that is, a central frequency, of the frequency band FB1. is f1. The bandwidth of the frequency band FB1 is Δf1.

There is a downlink signal that is determined to be transmitted by a subcarrier common to a plurality of mobile station devices 300. The signal that is determined to be transmitted by a subcarrier that is common to the plurality of mobile station devices 300 may be referred to be a "common subcarrier signal," The common subcarrier signal may be, for example, a synchronization signal for cell search. The common subcarrier signal may be a signal transmitted by a broadcast channel, such as a signal indicating the bandwidth Δf1 of the frequency band FB1 or a signal indicating a System Frame Number (SFN), for example. The common subcarrier signal is an example of a prescribed signal.

The common subcarrier signal may include a downlink L1/L2 control signal. The downlink L1/L2 control signal includes resource allocation information of a radio resource individually allocated to each of the mobile station devices 300 to transmit the OFDMA signal of downlink to each of the mobile station devices 300 and information that specifies a transmission system. Instead of including the downlink L1/L2 control signal, the common sub-carrier signal may include the resource allocation information of the radio resource individually allocated to each of the mobile station devices 300 to transmit the downlink L1/L2 control signal and the information that specifies the transmission system.

As described below, the base station device 100 performs scheduling of a frequency resource in such a way that a subcarrier, which transmits the common subcarrier signal and a subcarrier individually allocated to the mobile station device 300-2 that is to be relayed by the relay device 200, is located in a prescribed frequency band FB2. The carrier frequency of the frequency band FB2 is f2. The bandwidth of the frequency band FB2 is Δf2 that is narrower than the bandwidth Δf1 of the frequency band FB1. The frequency band FB2 is a part of the frequency band FB1. The frequency band FB2 may be, for example, a frequency band located in the center of the system frequency band FB1.

FIG. 2B is an explanation diagram of a frequency band used by the OFDMA signal of the downlink transmitted from the relay device 200. As described below, the relay device 200 detects mainly a signal in the part of the frequency band FB2 out of the OFDMA signals received from the base station device 100. By transforming the frequency of the detected signal, the relay device 200 transmits the detected signal to the mobile station device 300-2 by the frequency band FB3 that is different from the frequency band FB2. The carrier frequency of the frequency band FB3 is f3. As with the frequency band FB2, the bandwidth of the frequency band FB3 is Δf2.

FIG. 2C is an explanation diagram of a frequency band used by an uplink signal transmitted from the relay device 200. The relay device 200 receives, for example, the uplink signal of the frequency band FB3 transmitted from the mobile station device 300-2. The relay device 200 transforms the uplink signal, which is transmitted from the mobile station device 300-2, into a frequency band FB4 having a central frequency f4 that is different from the central frequency of the frequency band FB3 during reception, and transmits the uplink signal to the base station device 100.

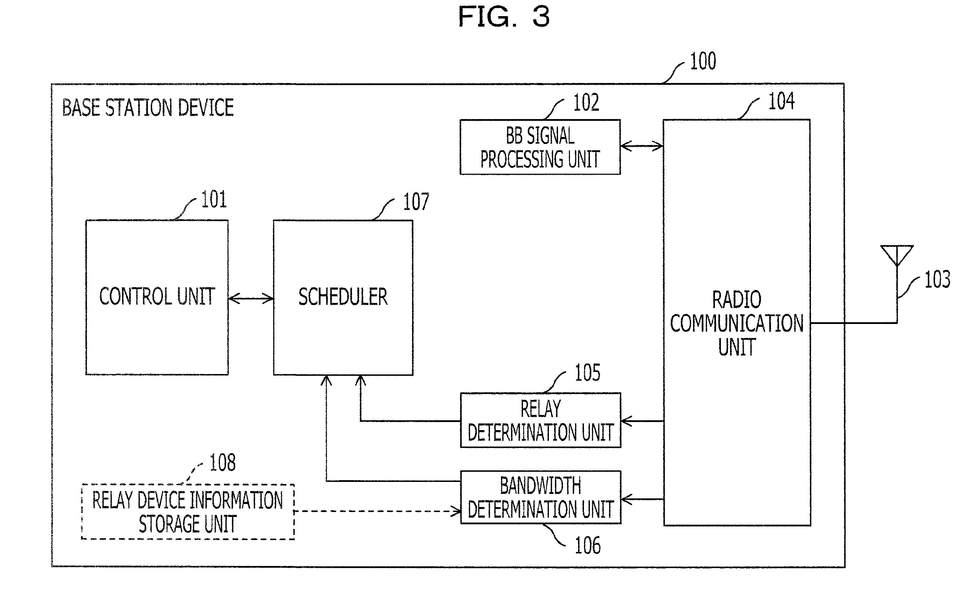

Components included in the radio communication system 1 will be described below. FIG. 3 is a diagram illustrating a first configuration example of the base station device 100 illustrated in FIG. 1. The base station device 100 includes a control unit 101, a baseband (BB) signal processing unit 102, an antenna 103, and a radio communication unit 104. The base station device 100 further includes a relay determination unit 105, a bandwidth determination unit 106, and a scheduler 107.

The control unit 101 controls operation of the base station device 100. The control unit 101 sends, to the scheduler 107, various setting values used for scheduling processing of communication between the base station device 100 and the mobile station device 300. The control unit 101 controls the operation of the base station device 100 according to the scheduling processing performed by the scheduler 107.

The BB signal processing unit 102 performs signal processing of a baseband signal of user data and control information transmitted between the base station device 100 and the mobile station device 300. The radio communication unit 104 performs transmitting and receiving processing for transmitting and receiving the user data and the control information to and from the mobile station device 300 through the antenna 103.

According to a relay notification signal transmitted from the mobile station device 300, the relay determination unit 105 determines whether or not each communication with the mobile station device 300 and with the base station device 100 is relayed by the relay device 200. As described below, based on the received downlink signal, the mobile station device 300 detects whether or not the received downlink signal is relayed by the relay device 200, and transmits the relay notification signal indicating the detection result to the base station device 100. The relay determination unit 105 outputs the determination result to the scheduler 107.

The bandwidth determination unit 106 determines the bandwidth Δf2 of the frequency band FB3 by which the relay device 200 transmits the downlink signal to the mobile station device 300-2. For example, the bandwidth determination unit 106 may determine the bandwidth Af2 according to a bandwidth notification signal transmitted from the mobile station device 300. As described below, based on the received downlink signal, the mobile station device 300 determines the bandwidth Δf2 of the received downlink signal and transmits the bandwidth notification signal indicating the determination result to the base station device 100.

For example, the bandwidth determination unit 106 may determine the bandwidth Δf2 of the frequency band FB3 according to specification information of the relay device 200 stored in the base station device 100 in advance. The base station device 100 may include a relay device information storage unit 108 that stores specification information of the relay device 200 that includes the bandwidth information of the downlink signal transmitted from the relay device 200.

The scheduler 107 determines allocation of the radio source and a transmission method of the radio resource to be used for the communication between the base station device 100 and the mobile station device 300. The scheduler 107 performs scheduling of a frequency resource in such a way that the subcarrier that transmits the common subcarrier signal and the subcarrier allocated to the mobile station device 300-2 to be relayed by the relay device 200 are located in the prescribed frequency band FB2. Accordingly, the common subcarrier signal, the control signal and the used data transmitted by the subcarrier allocated to the mobile station device 300-2 are transmitted from the base station device 100 by using the frequency band FB2.

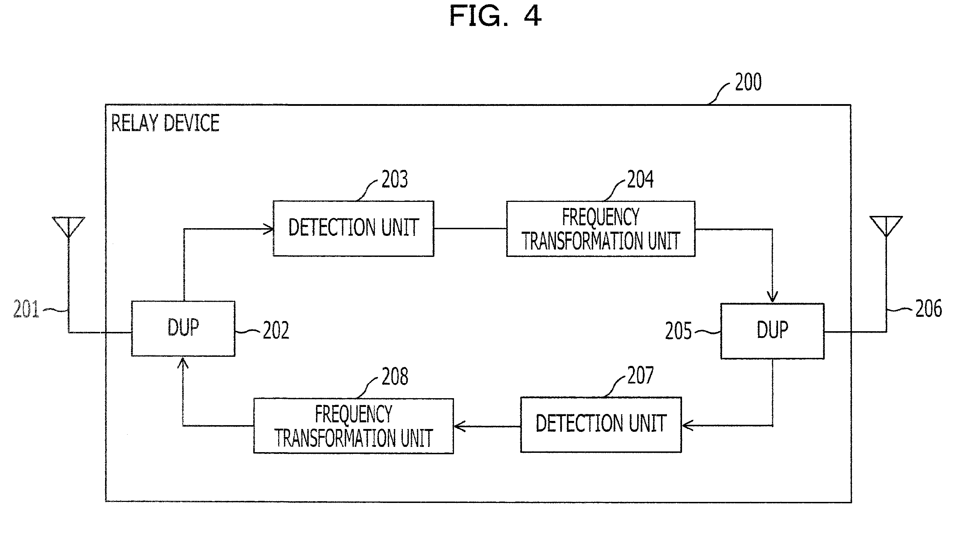

FIG. 4 is a diagram illustrating a first configuration example of the relay device 200 illustrated in FIG. 1. The relay device 200 includes antennas 201 and 206, antenna duplexers (DUP) 202 and 205, detection units 203 and 207, and frequency transformation units 204 and 208.

The antenna 201 receives a signal to be relayed of the downlink from the base station device 100 and transmits the signal to be relayed of an uplink to the base station device 100. The reception signal received by the antenna 201 is taken into the relay device 200 via the antenna DUP 202. The antenna 201 and the antenna DUP 202 are an example of a first receiving unit.

The detection unit 203 detects mainly a signal of the part of the frequency band FB2 out of the received OFDMA signals. The frequency transformation unit 204 transforms the signal of the frequency band FB2 into a signal of the frequency band FB3 by performing frequency transformation on the signal detected by the detection unit 203. That is, the frequency transformation unit 204 transforms the central frequency of the signal detected by the detection unit 203 from f2 into f3.

The antenna 206 transmits a signal to be relayed of the downlink for the mobile station device 300-2 in the cover area of the relay device 200 and receives the signal to be relayed of the uplink from the mobile station device 300-2. The signal transformed by the frequency transformation unit 204 is transmitted from the relay device 200 via the antenna DUP 205 and the antenna 206. The antenna 206 and the antenna DUP 205 are an example of a first transmitting unit.

The reception signal transmitted from the mobile station device 300-2 and received by the antenna 206 is input into the detection unit 207 via the antenna DUP 205. Out of the received OFDMA signals, the detection unit 207 detects mainly the signal of the part of the frequency band to be relayed by the relay device 200.

By performing the frequency transformation on the signal detected by the detection unit 207, the frequency transformation unit 208 transforms the signal into a signal of the frequency band FB4. The signal detected by the frequency transformation unit 208 is transmitted from the relay device 200 via the antenna DUP 202 and the antenna 201.

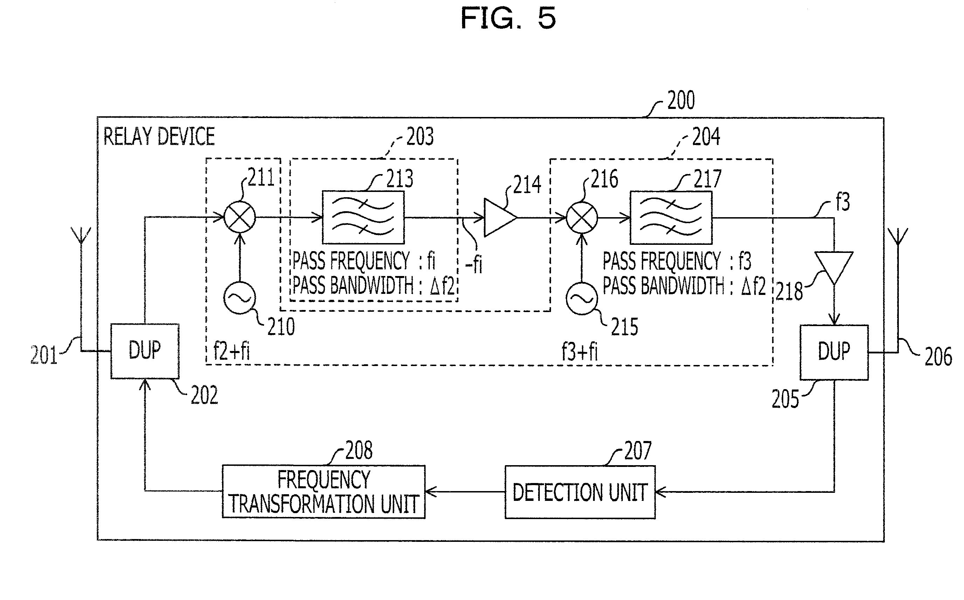

FIG. 5 is a diagram illustrating a first configuration example of the detection unit 203 and the frequency transformation unit 204 illustrated in FIG. 4. The detection unit 207 and the frequency transformation unit 208 may have substantially the same configuration. The relay device 200 includes local oscillators 210 and 215, multipliers 211 and 216, band pass filters 213 and 217, and amplifiers 214 and 218. The detection unit 203 is realized by the band pass filter 213. The frequency transformation unit 204 is realized by the local oscillators 210 and 215, the multipliers 211 and 216, and the band pass filters 213 and 217.

A frequency fi is assumed to be a prescribed intermediate frequency. The local oscillator 210 generates a local oscillation signal of a frequency "f2+fi." After the multiplier 211 multiplies the reception signal with the oscillation signal output from the local oscillator 210, the band pass filter 213 detects the intermediate frequency signal of the frequency "-fi" out of the output signal of the multiplier 211. In this case, the pass frequency of the band pass filter 213 is fi, and the pass frequency band is Af2.

Among the OFDMA signals having the central frequency f1 and the bandwidth Δf1, the signal detected by the band pass filter 213 is a signal having the central frequency f2 and the bandwidth Δf1. The amplifier 214 amplifies an intermediate frequency signal of the frequency "'-fi" and inputs the intermediate frequency signal into the multiplier 216.

The local oscillator 215 generates an oscillation signal of a frequency "f3+fi." After the multiplier 216 multiplies the output signal of the amplifier 214 by the oscillation signal output from the local oscillator 215, the band pass filter 217 detects the radio frequency signal of the frequency "f3"out of the output signal of the multiplier 216. In this case, the pass frequency of the band pass filter 217 is f3, and the pass frequency band is Δf2. The detection unit 203 and the frequency transformation unit 204 realized as described detect the signal of the part of the frequency band FB2 out of the received OFDMA signals, and transform the detected signal into a signal of the frequency band FB3.

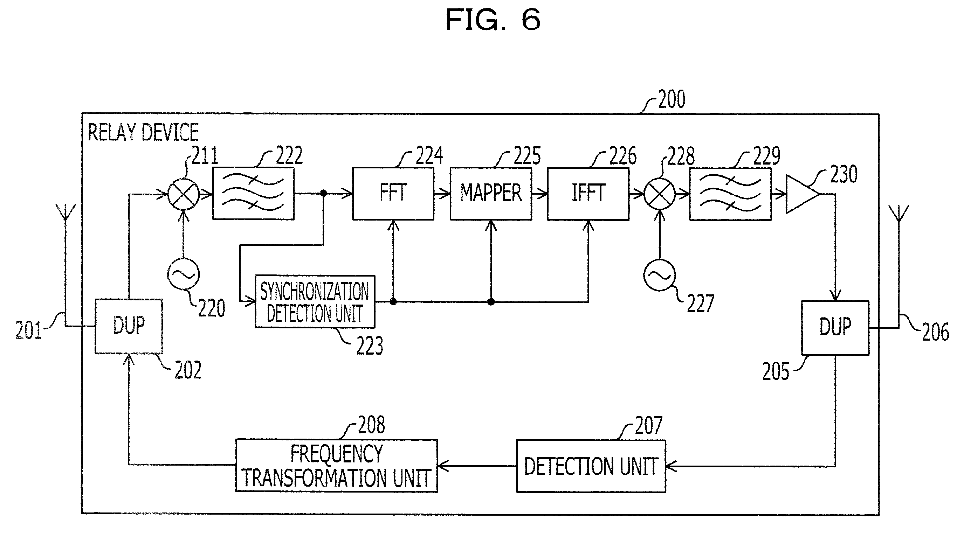

FIG. 6 is a diagram illustrating a second configuration example of the detection unit 203 and the frequency transformation unit 204 illustrated in FIG.4. The relay device 200 includes local oscillators 220 and 227, multipliers 221 and 228, band pass filters 222 and 229, and an amplifier 230. The relay device 200 includes a synchronization detection unit 223, a Fast Fourier Transform (FFT) unit 224, a mapper 225, and an Inverse Fast Fourier Transform (IFFT) unit 226. The synchronization detection unit 223, the FFT unit 224, the mapper 225, and the IFFT unit 226 realize functions of the detection unit 203 and the frequency transformation unit 204.

In the actual configuration, although an analog-digital transformer is provided in a latter stage of the band pass filter 222 and a digital-analog transformer is provided in a former stage of the multiplexer 228. The diagrams and descriptions are omitted for simplification. Similarly, even though a Cyclic Prefix (CP) adding unit is provided in a latter stage of the IFFT unit 226 in the actual configuration, the diagrams and descriptions are omitted for simplification.

A frequency transformer includes the local oscillator 220, the multiplier 221, and the band pass filter 222. The frequency transformer transforms the received OFDMA signal into an intermediate frequency signal or a baseband signal. The synchronization detection unit 223 generates a timing signal of frame synchronization with a reception frame based on the reception signal received from the base station device 100. For example, the synchronization detection unit 223 may establish frame synchronization with the reception frame by using a pilot signal transmitted from the base station device 100. The synchronization detection unit 223 sends the generated timing signal to the FFT unit 224, the mapper 225, and the IFFT unit 226.

By performing fourier transformation on the received OFDMA signal according to the timing signal for frame synchronization received from the synchronization detection unit 223, the FFT unit 224 detects a complex symbol string that modulates each of a plurality of subcarriers. According to the timing signal transmitted from the synchronization detection unit 223, the IFFT unit 226 generates an OFDMA signal by modulating the plurality of subcarriers by the complex symbol string.

The complex symbol string output from the FFT unit 224 is input into the IFFT unit 226 through the mapper 225. The mapper 225 performs mapping between the complex symbol output from the FFT unit 224 and the complex symbol that modulates each of the plurality of subcarriers in the IFFT unit 226.

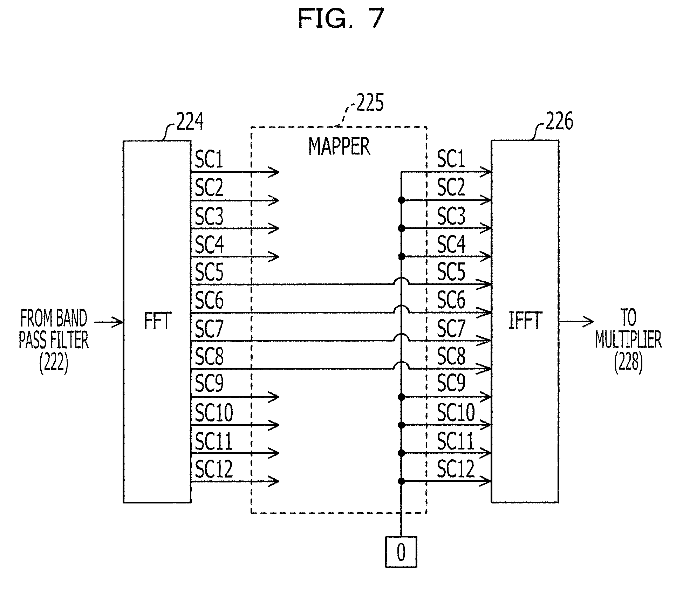

FIG. 7 is a diagram illustrating a configuration example of the mapper 225 illustrated in FIG. 6. The FFT unit 224 outputs each complex symbol that modulates each of the subcarriers SC1 to SC 12. The mapper 225 inputs the complex symbol to be detected that modulates the subcarriers SC5 to SC8 located in the frequency band FB2 to be detected, as a complex symbol that modulates the respective subcarriers SC5 to SC8, into the IFFT unit 226.

The mapper 225 inputs a value "0" as an input of the IFFT unit 226 that inputs a complex symbol that demodulates the other subcarriers SC1 to SC4, and SC9 to SC12. Accordingly, out of the input OFDMA signals, the IFFT unit 226 outputs an OFDMA signal that includes mainly the subcarrier located in the part of the frequency band FB2.

With reference to FIG. 6, embodiments will be described below. A frequency transformer includes the local oscillator 227, the multiplier 228, and the band pass filter 229. The frequency transformer transforms the carrier frequency of the OFDMA signal output from the IFFT unit 226 into the carrier frequency f3 of the frequency band FB3. The OFDMA signal subjected to the frequency transformation is amplified by the amplifier 230 and is then output from the antenna 206 through the antenna DUP 205.

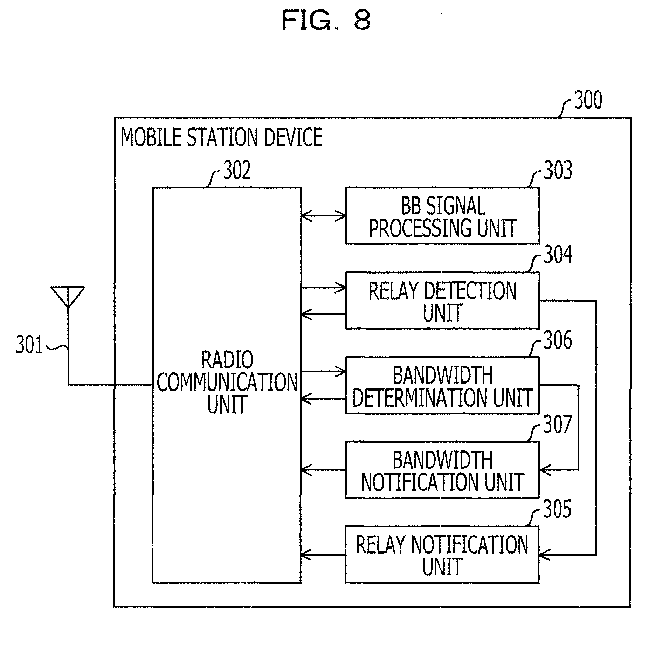

FIG. 8 is a diagram illustrating a configuration example of the mobile station device 300. The mobile station deice 300 includes an antenna 301, a radio communication unit 302, a baseband (BB) signal processing unit 303, and a relay detection unit 304. The mobile station device 300 includes a relay notification unit 305, a bandwidth determination unit 306, and a bandwidth notification unit 307.

The radio communication unit 302 performs transmitting and receiving processing of the user data and the control information to and from the base station device 100 through the antenna 301. The BB signal processing unit 303 performs signal processing of a baseband signal of the user data and the control information transmitted between the mobile station device 300 and the base station device 100.

Based on the received downlink signal, the relay detection unit 304 detects whether or not the received downlink signal is relayed by the relay device 200. For example, the relay detection unit 304 detects a known signal transmitted by a prescribed carrier in the frequency band FB2 of the OFDMA signal transmitted from the base station device 100. By determining whether or not the known signal is transmitted by the prescribed carrier in the frequency band FB3, the relay detection unit 304 detects whether or not the received downlink signal is relayed by the relay device 200. For example, a prescribed pattern signal may be used as the above-described known signal. For example, a synchronization signal for cell search may be used as the known signal. The relay detection unit 304 outputs the above-described detection result to the relay notification unit 305.

The relay detection unit 304 determines a carrier frequency of the received downlink signal based on the above-described detection result. For example, depending on whether or not the received downlink signal is relayed by the relay device 200, the relay detection unit 304 determines whether the carrier frequency of the reception signal is the known transmission frequency f3 of the relay device 200 or the known transmission frequency f1 of the base station device 100.

For example, the relay detection unit 304 may determine the carrier frequency according to a known frequency difference between the frequency of the subcarrier that transmits the above-described known signal and the carrier frequency. The relay detection unit 304 outputs a signal indicating the detected carrier frequency to the radio communication unit 302.

The relay notification unit 305 generates a relay notification signal indicating the detection result of the relay detection unit 304, and the radio communication unit 302 transmits the relay notification signal to the base station device 100.

The bandwidth determination unit 306 determines the bandwidth of the received downlink signal. For example, the bandwidth determination unit 306 may detect known reference signals that are dispersed in the frequency band of the received downlink signal. The bandwidth determination unit 306 may determine the range of the frequency in which the subcarrier that includes the reference signal is detected as a bandwidth of the received downlink signal.

Depending on whether or not the relay of the relay device 200 detected by the relay detection unit 304 is performed, the bandwidth determination unit 306 may determine the bandwidth of the reception signal is the known bandwidth Δf2 of the transmission signal of the relay device 200 or the known bandwidth Δf1 of the transmission signal of the base station device 100.

The bandwidth determination unit 306 outputs the determination result to the bandwidth notification unit 307 and the radio communication unit 302. The bandwidth notification unit 307 transmits, to the base station device 100, the bandwidth notification signal indicating the determination result from the bandwidth determination unit 306.

The radio communication unit 302 demodulates and decodes the common subcarrier signal transmitted by the frequency band centering the carrier frequency indicated by the relay detection unit 304. The radio communication unit 302 obtains the resource allocation information and the transmission method included in the common subcarrier signal, and demodulates and decodes the control signal and the used data transmitted by using the radio resource individually allocated to the mobile station device 300.

Therefore, if the mobile station device 300 is not relayed by the relay device 200, the radio communication unit 302 demodulates and decodes the common subcarrier signal transmitted by the frequency band FB2 in the system frequency band FB1. The radio communication unit 302 obtains the resource allocation information and the transmission method included in the common subcarrier signal, and demodulates and decodes the control signal and the user data transmitted by any of the subcarriers allocated to the mobile station device 300 in the system band FB1.

On the other hand, if the mobile station device 300 is relayed by the relay device 200, the radio communication unit 302 demodulates and decodes the common subcarrier signal transmitted by the frequency band FB3. The radio communication unit 302 obtains the resource allocation information and the transmission method included in the common subcarrier signal, and demodulates and decodes the control signal and the user data transmitted by using the subcarrier in the frequency band FB3.

The radio communication unit 302 has a carrier frequency indicated by the relay detection unit 304 as a central frequency and transmits the uplink signal by the frequency band FB3 having the bandwidth indicated by the bandwidth determination unit 306.

The relay device 200 according to the present embodiment detects mainly the frequency band FB2 that is narrower than the frequency band FB1 as a system band, and then frequency-transforms and transmits the uplink signal into the cover area. As a result, compared to a case where the frequency band to be relayed is not limited, the frequency bandwidth in which the radio signals before and after the relay are occupied is reduced.

If the frequency band FB3 is selected to overlap the system band FB1, the frequency bandwidth occupied by the radio signals before and after the relay may be further reduced. If the frequency band FB3 is selected to be completely included in the system band FB1, the use bandwidth of the radio communication system 1 may not increase due to the relay by the relay device 200.

According to the present embodiment, since the frequency band transmitted by the relay device 200 may be narrower, power consumption may be reduced compared to a case where the frequency band to be replayed is not limited.

If the relay device 200 is the above-described booster device, for example, the relay device 200 amplifies the received radio signal to a prescribed level and retransmits the radio signal. Therefore, the relay device 200 transmits not only the signal component of the received radio signal but also noise occurred in the amplifier inside the relay device 200. If a plurality of relay devices 200 is provided in the cover area of one base station device 100, the channel capacity is reduced because of combination of noise component output from the relay devices 200 in the uplink.

According to the present embodiment, since the frequency band transmitted from the relay device 200 may be narrower, the frequency band in which the noise component is output from the relay device 200 in the uplink is narrow. As a result, the reduction of the channel capacity due to the combination of the noise component output from each of the relay devices may be reduced.

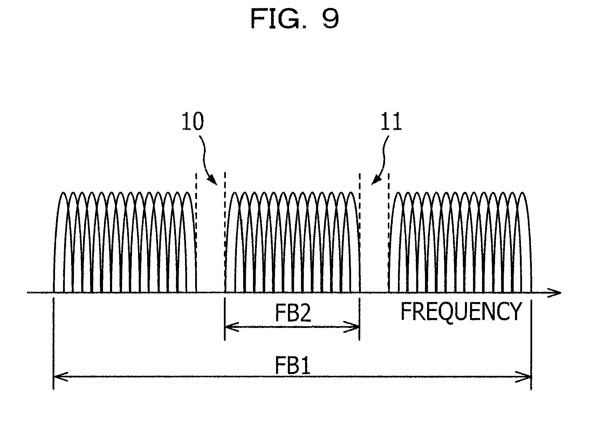

Other embodiments of frequency resource allocation by the base station device 100 will be described. FIG. 9 is an explanation diagram of an embodiment of frequency resource allocation processing performed by the base station device 100. The scheduler 107 of the base station device 100 may perform scheduling of a frequency resource in such a way that guard bands 10 and 11 are provided in one or both adjacent areas of the frequency band FB2 detected by the relay device 200. The above-described guard bands 10 and 11 may reduce, for example, adjacent leakage power that may be generated due to imperfection of the band pass filter that detects the frequency band FB2.

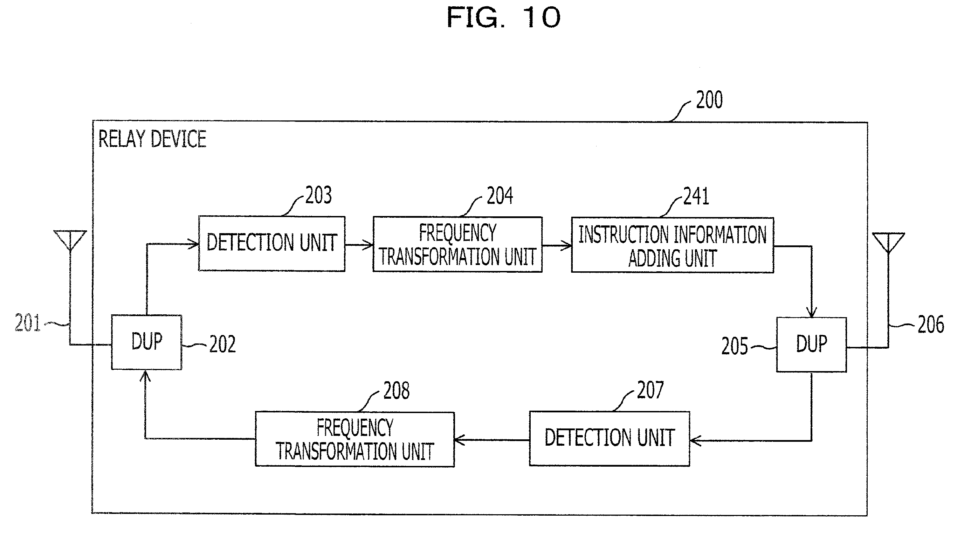

A description will be made of another embodiment for determining whether or not the communication between the mobile station device 300 and the base station device 100 is relayed by the relay device 200. FIG. 10 is a diagram illustrating a second configuration example of the relay device 200 illustrated in FIG. 1. The components equivalent to the components illustrated in FIG. 4 are indicated with the numerals used in the FIG. 4. The relay device 200 includes an instruction information adding unit 241. The instruction information adding unit 241 adds information indicating that the signal is relayed by the relay device 200 to a signal transmitted from the relay device 200. For description convenience, the information added to the radio signal to indicate that the radio signal is relayed by the relay device 200 is indicated as "instruction information."

For example, by multiplexing a prescribed pattern with the signal to be relayed, the instruction information adding unit 241 may add the instruction information to the signal to be relayed. For example, the instruction information adding unit 241 may multiplex the prescribed pattern with a frequency band, which seldom affects a main signal of the signal to be relayed. For example, the instruction information adding unit 241 may multiplex the prescribed pattern by code-spreading. At this time, by detecting the instruction information, the relay detection unit 304 of the mobile station device 300 illustrated in FIG. 8 detects whether or not the received downlink signal is relayed by the relay device 200.

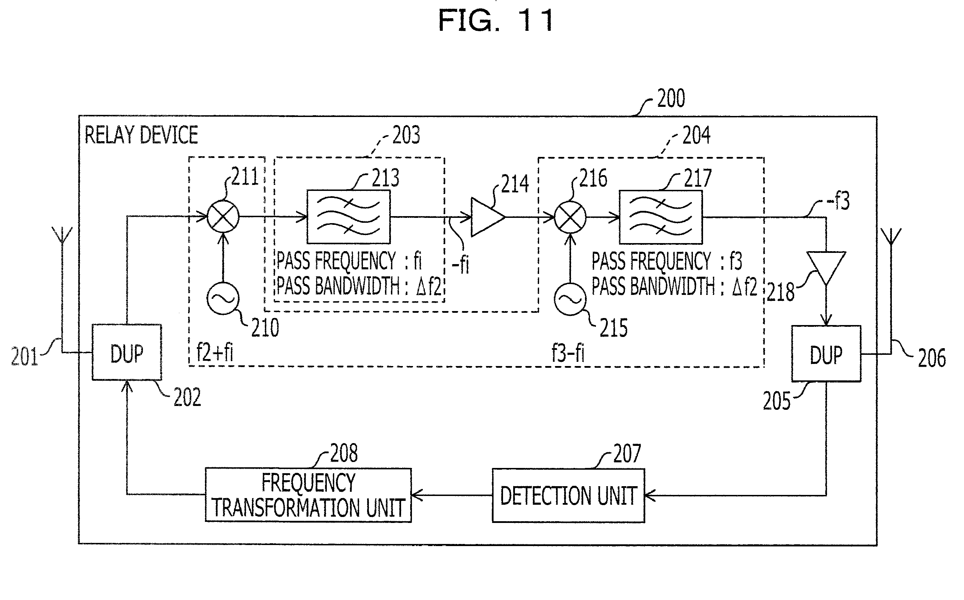

The relay device 200 may add the instruction information to the signal to be relayed by inverting a sign of the frequency of the signal to be relayed, that is, by inverting a spectrum of the reception signal. FIG. 11 is a diagram illustrating a configuration example for adding instruction information in the above-described manner.

The components equivalent to the components illustrated in FIG. 5 are indicated with the numerals used in FIG. 5. The local oscillator 215 generates a local oscillation signal of a frequency "f3-fi". Therefore, after the multiplier 216 multiplies the output signal of the amplifier 214 by the oscillator signal output from the local oscillator 215, if the multiplied signal is filtered by the band pass filter 217, a radio frequency signal of the frequency "-f3" is generated. In this manner, the relay device 200 transmits a signal of the frequency "-f3" that has a sign opposite to the sign of the frequency of the reception signal, that is, the signal of the frequency "-f3" having the spectrum inverted with respect to the reception signal.

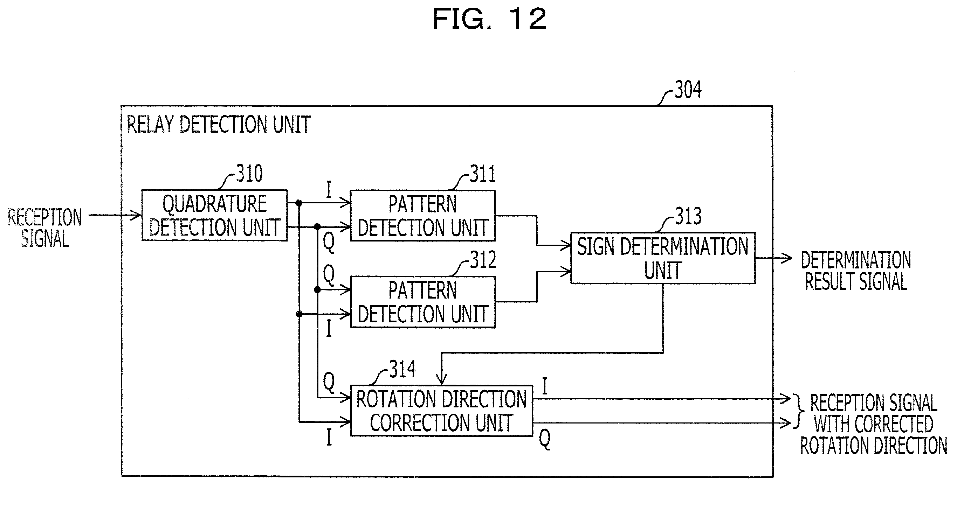

FIG. 12 is a diagram illustrating a configuration example of the relay detection unit 304. By determining whether or not the sign of the frequency of the reception signal is inverted by the configuration illustrated in FIG. 11, the relay detection unit 304 determines whether or not the reception signal is relayed by the relay device 200. The relay detection unit 304 includes a quadrature detection unit 310, pattern detection units 311 and 312, a sign determination unit 313, and a rotation direction correction unit 314.

The quadrature detection unit 310 performs quadrature detecting processing on the reception signal and generates an in-phase-component signal (I component signal) and a quadrature-component signal (Q component signal). The pattern detection unit 311 calculates a correlation between the prescribed pattern included in the reception signal and the pattern of a symbol of a signal point corresponding to the I component signal and the Q component signal output from the quadrature detection unit 310. For example, the pattern detection unit 311 may use a pilot signal or a reference signal as the above-described pattern.

On the other hand, the pattern detection unit 312 calculates a correlation between the pattern of the symbol corresponding to a signal, which inverts a rotation direction of a phase of the I component signal and the Q component signal output from the quadrature detection unit 310, and the above-described prescribed pattern.

Based on the correlation calculated by the pattern detection units 311 and 312, the sign determination unit 313 determines whether or not the sign of the frequency of the transmission wave of the reception signal is inverted, that is, whether or not the reception signal is relayed by the relay device 200.

If the correlation calculated by the pattern detection unit 311 is higher than the correlation calculated by the pattern detection unit 312, the sign determination unit 313 determines that the sign of the frequency of a transmission wave of the reception signal is not inverted. If the correlation calculated by the pattern detection unit 311 is lower than the correlation calculated by the pattern detection unit 312, the sign determination unit 313 determines that the sign of the frequency of the transmission wave of the reception signal is inverted. The sign determination unit 313 outputs, to the relay notification unit 305, the determination result signal indicating whether or not the reception signal is relayed by the relay device.

According to the determination result of the sign determination unit 313, the rotation direction correction unit 314 corrects the rotation direction of the phase of the I component signal and the Q component signal output from the quadrature detection unit 310. If the sign of the frequency of the transmission wave of the reception signal is not inversed, the rotation direction correction unit 314 outputs the I component signal and the Q component signal output from the quadrature detection unit 310 to the radio communication unit 302.

When the sign of the frequency of the transmission wave of the reception signal is inverted, the rotation direction correction unit 314 outputs the I component signal and the Q component signal output from the quadrature detection unit 310 to the radio communication unit 302 after inverting the rotation direction of the phase of the I component signal and the Q component signal. For example, the rotation direction correction unit 314 may invert the rotation direction of the phase of the I component signal and the Q component signal by replacing the in-phase-component with the quadrature component of the I component signal and the Q component signal that are input. The rotation direction correction unit 314 may invert the rotation direction of the phase of the I component signal and the Q component signal, for example, by inverting one of the values of the I component signal and the Q component signal that are input. The radio communication unit 302 decodes the in-phase component and the quadrature component output from the rotation direction correction unit 314 as a reception signal.

According to the present embodiment, addition of the instruction information by the relay device 200 enables the relay detection unit 304 to detect that the relay reception signal is relayed by the relay device 200. The relay device 200 may add the instruction information to the uplink signal by using the configuration equivalent to the above-described embodiment. Depending on whether or not the instruction information is added to the uplink signal, the relay determination unit 105 of the base station device 100 illustrated in FIG. 3 may determine whether or not the communication between each of the mobile station devices 300 and the base station device 100 is relayed by the relay device 200. The above-described embodiment in which the relay device 200 adds the instruction information to at least one of the downlink signal and the uplink signal is applicable to any of the embodiments described below.

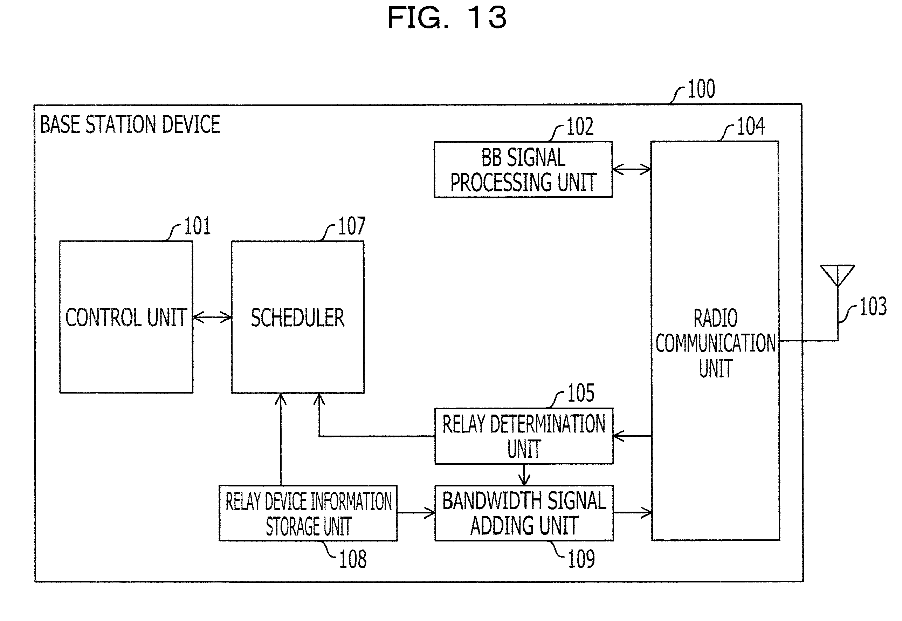

Another embodiment for determining the bandwidth Δf2 of the downlink signal will be described. The configuration example is applicable to any of the embodiments described below, FIG. 13 is a diagram illustrating a second configuration example of the base station device 100 illustrated in FIG. 1. The components equivalent to the components illustrated in FIG. 3 are indicated with the numerals used in FIG. 3.

The base station device 100 includes a bandwidth signal adding unit 109. Regarding to the mobile station device 300-2 that is determined by the relay determination unit 105 as the mobile station device relayed by the relay device 200, the bandwidth signal adding unit 109 reads information related to the bandwidth Δf2 of the relay device 200 from the relay device information storage unit 108. The relay device information storage unit 108 previously stores the information related to the bandwidth Δf2 of the relay device 200.

The bandwidth signal adding unit 109 outputs the information related to the read bandwidth Δf2 to the radio communication unit 104. The radio communication unit 104 transmits a second bandwidth signal indicating the bandwidth Δf2 by the subcarrier located in the frequency band FB2. For example, the radio communication unit 104 transmits the second bandwidth signal as one of the common subcarrier signals. The common subcarrier signal may include both the first bandwidth signal indicating the system bandwidth Δf1 and the second bandwidth signal indicating the bandwidth Af2.

If the mobile station device 300 illustrated in FIG. 8 is relayed by the relay device 200, the bandwidth determination unit 306 determines the bandwidth of the received downlink signal by detecting the second bandwidth signal transmitted by the subcarrier located in the frequency band FB2. Alternatively, if the mobile station device 300 illustrated in FIG. 8 is relayed by the relay device 200, the bandwidth determination unit 306 determines the bandwidth of the received downlink signal by detecting the second bandwidth signal transmitted as one of the common subcarrier signals.

According to the present embodiment, the bandwidth of the downlink signal may be determined when the base station device 100 adds the second bandwidth signal to the downlink signal.

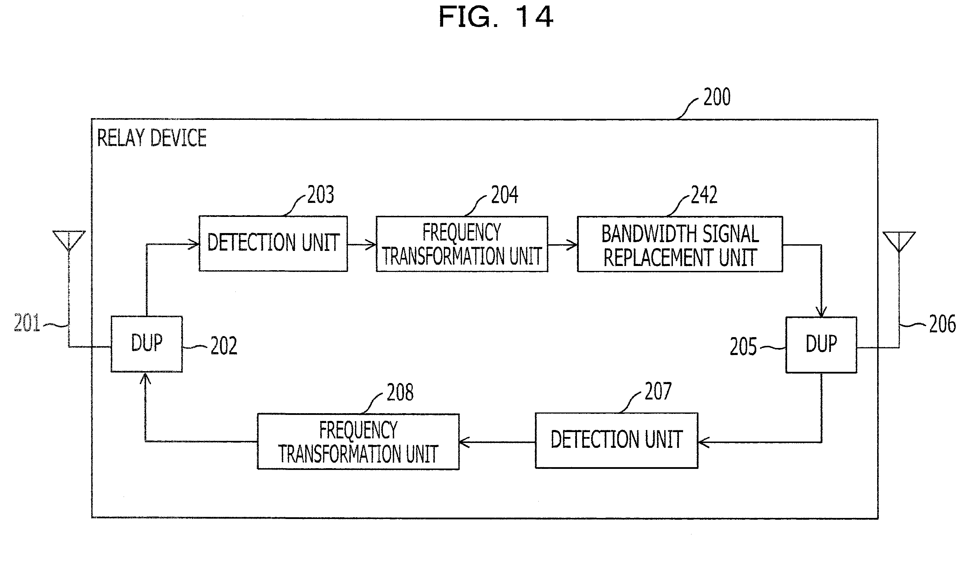

After that, another embodiment for determining the bandwidth Δf2 of the received downlink signal by the mobile station device 300. The present configuration example is applicable to any of the embodiments described below. FIG. 14 is a diagram illustrating a third configuration example of the relay device 200 illustrated in FIG. 1. The components equivalent to the components illustrated in FIG. 4 are indicated with the numerals used in FIG. 4.

The relay device 200 includes a bandwidth signal replacement unit 242. Out of the subcarriers included in the relayed OFDMA signal, the bandwidth signal replacement unit 242 replaces the subcarrier that transmits the first bandwidth signal indicating the system bandwidth Δf1 with a subcarrier modulated by the second bandwidth signal indicating the bandwidth Δf2.

The bandwidth signal replacement unit 242 includes, for example, a fourier transformation unit, a mapper, and an inverse fourier transformation unit. By performing fourier transformation on the OFDMA signal to be replayed, the fourier transformation unit detects a plurality of complex symbols by which a plurality of subcarriers is modulated, respectively. The mapper replaces the symbol indicating the system bandwidth Δf1 out of the complex symbols output from the fourier transformation unit with a symbol indicating the bandwidth Δf2. The inverse fourier transformation unit modulates the subcarrier by the complex symbol replaced with the symbol by the mapper, and generates an OFDMA signal.

By processing equivalent to the processing for detecting the first bandwidth signal as one of the common subcarrier signals, the bandwidth determination unit 306 of the mobile station device 300 illustrated in FIG. 8 detects the second bandwidth signal added to the downlink signal by the relay device 200. By detecting the second bandwidth signal in this manner, the bandwidth determination unit 306 determines the bandwidth of the received downlink signal.

According to the present embodiment, the mobile station device 300 also may determine the bandwidth Δf2 if the relay device 200 replaces the subcarrier that transmits the signal indicating the system bandwidth Δf1 with the subcarrier modulated by the signal indicating the bandwidth Δf2.

A use example of the frequency resource in a case where a plurality of relay devices 200 is provided with respect to one base station device 100 will be described. The example of the frequency resource allocation processing according to the present embodiment is applicable to any of the embodiments described below.

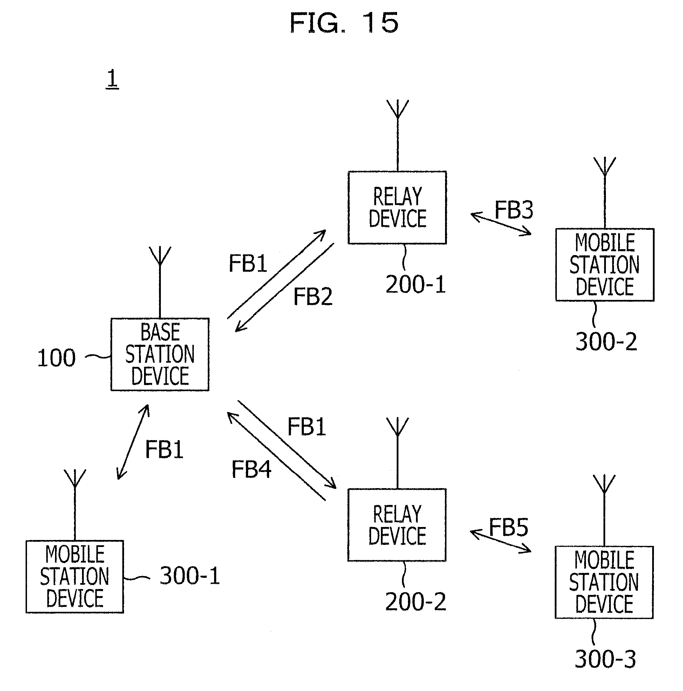

FIG. 15 is a configuration diagram of the second embodiment of the radio communication system. A radio communication system 1 includes a base station device 100, relay devices 200-1 and 200-2, and mobile station devices 300-1, 300-2, and 300-3. The relay devices 200-1 and 200-2 may be collectively referred to as a relay device 200. The mobile station devices 300-1, 300-2, and 300-3 may be collectively referred to as a mobile station device 300. The configurations of the base station device 100, the relay device 200, and the mobile station device 300 may be any of the above-described embodiments.

The mobile station device 300-2 exists in the cover area of the relay device 200-1. The relay device 200-1 relays radio communication between the mobile station device 300-2 and the base station device 100. The mobile station device 300-3 exists in the cover area of the relay device 200-2. The relay device 200-2 relays the radio communication between the mobile station device 300-3 and the base station device 100. The mobile station device 300-1 performs the radio communication with the base station device 100 without via the relay device 200.

The radio communication between the mobile station device 300-1 and the base station device 100 uses the frequency band FB1. The radio communication of the downlink between the relay device 200-1 and the base station device 100 and the radio communication of the downlink between the relay device 200-2 and the base station device 100 use the frequency band FB1.

On the other hand, the radio communication between the relay device 200-1 and the mobile station device 300-2 uses the frequency band FB3 having a bandwidth that is narrower than the bandwidth of the frequency band FB1. The radio communication between the relay device 200-2 and the mobile station device 300-3 uses a frequency band FB5 having a bandwidth that is narrower than the bandwidth of the frequency band FB1. The frequency band FB3 used between the relay device 200-1 and the mobile station device 300-2 is a frequency band different from the frequency band FB5 that is used between the relay device 200-2 and the mobile station device 300-3.

The relay device 200-1 transforms the uplink signal transmitted from the mobile station device 300-2 into the frequency band FB2 having a central frequency different from the central frequency of the frequency band FB3 during reception, and transmits the uplink signal to the base station device 100. The relay device 200-2 transforms the uplink signal transmitted from the mobile station device 300-3 into the frequency band FB4 having the central frequency that is different from the central frequency of the frequency band FB5 during reception, and transmits the uplink signal to the base station device 100. The frequency band FB4 by which the uplink signal is transmitted from the relay device 200-2 is different from the frequency band FB2 by which the uplink signal is transmitted from the relay device 200-1.

A frequency band that is equivalent to the frequency band FB2 or overlaps the frequency band FB2 may be used as the frequency band FB5. Moreover, a frequency band that is equivalent to the frequency band FB4 or overlaps the frequency band FB4 may be used as the frequency band FB3.

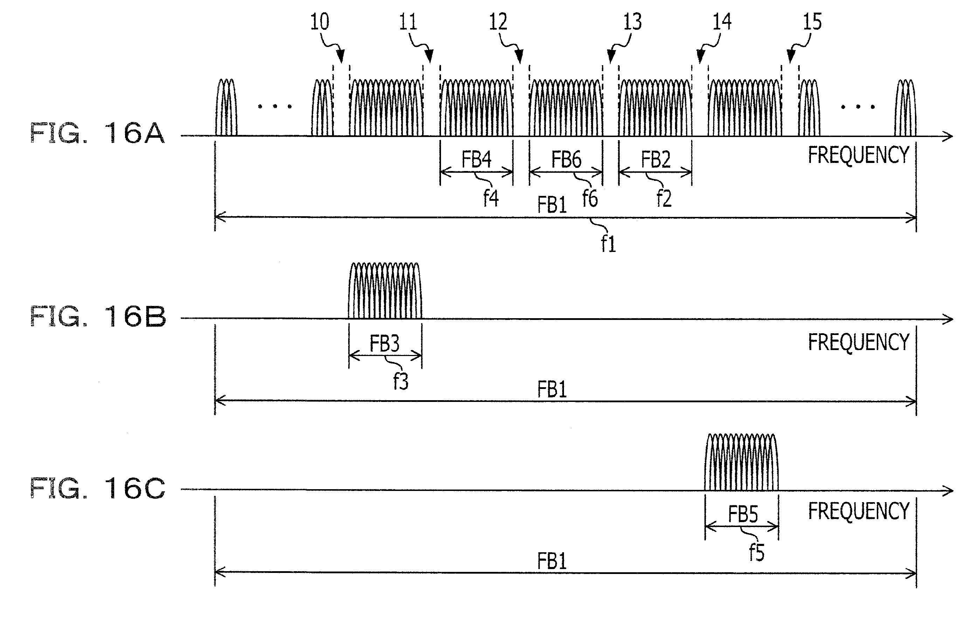

In the radio communication system illustrated in FIG. 15 and FIG. 16A is an explanation diagram of a frequency band used by the OFDMA signal of the downlink transmitted from the base station device 100. The downlink signal transmitted from the base station device 100 is transmitted by the system band FB1. The carrier frequency of the frequency band FB1 is f1.

The scheduler 107 of the base station device 100 performs scheduling of the frequency resource so that the subcarrier that transmits the common subcarrier signal is located in the prescribed frequency band FB6. The carrier frequency of the frequency band FB6 is f6, and the bandwidth of the frequency band FB6 is narrower than the bandwidth of the frequency band FB1. The frequency band FB6 is a part of the frequency band FB1. The frequency band FB6 may be positioned in the center of the system frequency bandwidth FB1, for example. The mobile station device 300-1 receives the common subcarrier signal transmitted by the subcarrier in the frequency band FB6.

The scheduler 107 performs the scheduling of the frequency resource in such a way that the subcarrier that transmits the common subcarrier signal and the subcarrier allocated to the mobile station device 300-2 that is to be relayed by the relay device 200-1 are located in the prescribed frequency band FB2. The carrier frequency f2 of the frequency band FB2 is f2, and the bandwidth of the frequency band FB2 is narrower than the bandwidth of the frequency band FB1. The frequency band FB2 is a part of the frequency band FB1.

FIG. 16B is an explanation diagram of the frequency band used by the OFDMA signal of the downlink transmitted from the relay device 200-1. Out of the OFDMA signals received from the base station device 100, the relay device 200-1 detects mainly the signal of the part of the frequency band FB2. By transforming the frequency of the detected signal, the relay device 200-1 transmits the detected signal to the mobile station device 300-2 by the frequency band FB3. The carrier frequency of the frequency band FB3 is f3, the bandwidth of the frequency band FB3 is equivalent to the bandwidth of the frequency band FB2.

The mobile station device 300-2 receives the common subcarrier signal transmitted by the subcarrier in the frequency band FB3. The mobile station device 300-2 obtains the resource allocation information and the transmission method included in the common subcarrier signal. The mobile station device 300-2 receives the control signal and the user data transmitted by the radio resource allocated to the mobile station device 300-2 included in the frequency band FB3.

In the present embodiment, the frequency band FB2, which is equivalent to the frequency band by which the uplink signal is transmitted from the relay device 200-1, is used as a frequency band in which the subcarrier that transmits the common subcarrier signal and the subcarrier allocated to the mobile station device 300-2 are located. The frequency band in which the subcarrier that transmits the common subcarrier signal and the subcarrier allocated to the mobile station device 300-2 individually are located may be different from the frequency band by which the uplink signal is transmitted from the relay device 200-1. For the mobile station device 300-3 and the relay device 200-2, the similar descriptions will be made.

With reference to FIG. 16A, embodiments will be described. The scheduler 107 performs the scheduling of the frequency resource in such a way that the subcarrier that transmits the common subcarrier signal and the subcarrier allocated to the mobile station device 300-3 to be relayed by the relay device 200-2 are located in the prescribed frequency band FB4. The carrier frequency of the frequency band FB4 is f4, and the bandwidth of the frequency band FB4 is narrower than the bandwidth of the frequency band FB1. The frequency band FB 4 is a part of the frequency band FB1.

FIG. 16C is an explanation diagram of the frequency band used by the OFDMA signal of the downlink transmitted from the relay device 200-2. The relay device 200-2 detects mainly the signal of the part of the frequency band FB4 out of the OFDMA signals received from the base station device 100. By transforming the frequency of the detected signal, the relay device 200-2 transmits the detected signal to the mobile station device 300-3 by the frequency band FB5. The carrier frequency of the frequency band FB5 is f5, the bandwidth of the frequency band FB5 is equivalent to the bandwidth of the frequency band FB4.

The mobile station device 300-3 receives the common subcarrier signal that is transformed by the subcarrier in the frequency band FB5. The mobile station device 300-3 obtains the resource allocation information and the transmission method included in the common subcarrier signal. The mobile station device 300-3 receives the control signal and the user data, which are transmitted by the radio resource allocated to the mobile station device 300-3, included in the frequency band FB5.

According to the present embodiment, different frequency bands are used in the cover areas of the relay devices 200-1 and 200-2 provided with respect to one base station device 100. Therefore, interference between the cover areas of the relay devices 200-1 and 200-2 may be reduced.

According to the present embodiment, the scheduler 107 locates the subcarriers that transmit the common subcarrier signal in the frequency band FB2 and the frequency band FB4 of the downlink to be relayed by the relay devices 200-1 and 200-2. Therefore, even if the frequency band detected by the relay device 200 is different in the respective relay device 200, the common subcarrier signal may be replayed. If the frequency detected by the relay device 200 is different in the respective relay device 200, the downlink signals included in each of the frequency bands detected by the relay device 200 may be reduced.

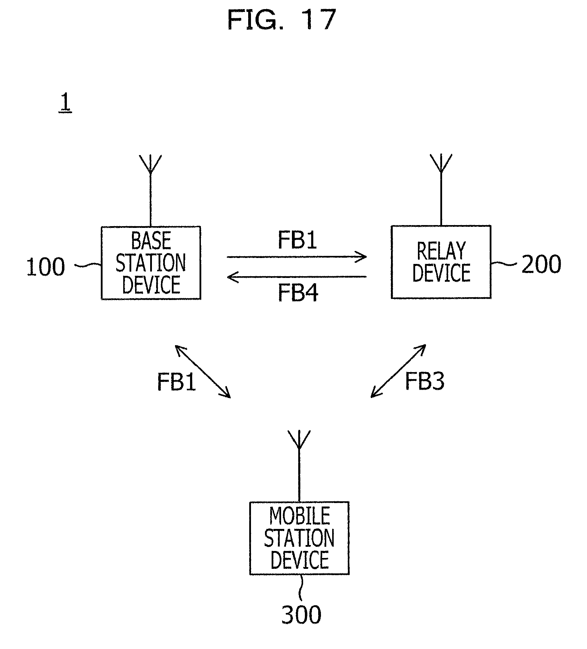

An example of processing of a case where the mobile station device 300 receives the downlink signal from the base station device 100 and the relay device 200. FIG. 17 is a configuration diagram of a third embodiment of the radio communication system. The radio communication system 1 includes the base station device 100, the relay device 200, and the mobile station device 300. The configuration of the relay device 200 may be any of the above-described embodiments.

The radio communication between the mobile station device and the base station device 100 in the cover area of the base station device 100 uses the frequency band FB1. On the other hand, the radio communication between the mobile station device and the relay device 200 in the cover area of the relay device 200 uses the frequency band FB3. The radio communication of the downlink between the relay device 200 and the base station device 100 uses the frequency band FB1.

Out of the OFDMA signals received from the base station device 100, the relay device 200 detects mainly the signal of the part of the frequency band FB2 and transmits the detected signal by the frequency band FB3 by transforming the frequency of the detected signal. The relay device 200 transforms the uplink signal transmitted from the mobile station device in the cover area into the frequency band FB4 having the central frequency that is different from the central frequency of the frequency band FB3 during reception, and transmits the uplink signal to the base station device 100. As described above, the use example of the frequency band in the radio communication system 1 illustrated in FIG. 17 may be equivalent to the use example described with reference to FIG. 1 and FIGs. 2A to 2C.

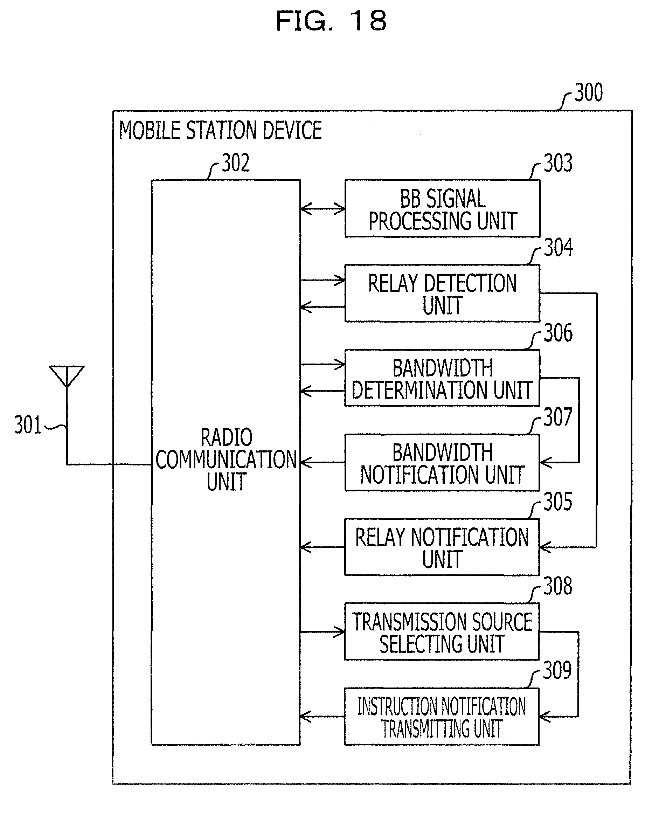

It is assumed that the mobile station device 300 may receive a downlink signal from both the base station device 100 and the relay device 200. FIG. 18 is a diagram illustrating a configuration example of the mobile station device 300 illustrated in FIG. 17. The components equivalent to the components illustrated in FIG. 8 are indicated with the numerals used in FIG. 8.

The mobile station device 300 includes a transmission source selecting unit 308 and an instruction notification transmitting unit 309. The transmission source selecting unit 308 determines whether or not the relay by the relay device 200 is appropriate according to a reception quality of a reception wave from the relay device 200 and the reception quality of the reception wave from the base station device 100.

The transmission source selecting unit 308 may use, for example, a reception level of the reception wave as the reception quality. The transmission source selecting unit 308 may use a line quality, which is determined as the reception quality, according to a prescribed index value related to the reception signal, for example. For example, the transmission source selecting unit 308 may determine the line quality based on an error generation rate.

For example, the transmission source selecting unit 308 compares the reception quality of the reception wave from the relay device 200 to the reception quality of the reception wave from the base station device 100. If the reception quality of the reception wave from the relay device 200 is higher than the reception quality of the reception wave from the base station device 100, the transmission source selecting unit 308 determines that the relay by the relay device 200 is appropriate. If the reception quality of the reception wave from the relay device 200 is not higher than the reception quality of the reception wave from the base station device 100, the transmission source selecting unit 308 determines that the relay by the relay device 200 is not appropriate.

The instruction notification transmitting unit 309 generates a first instruction notification that instructs whether the relay by the relay device 200 is appropriate or not, and the radio communication unit 302 transmits the first instruction notification to the base station device 100.

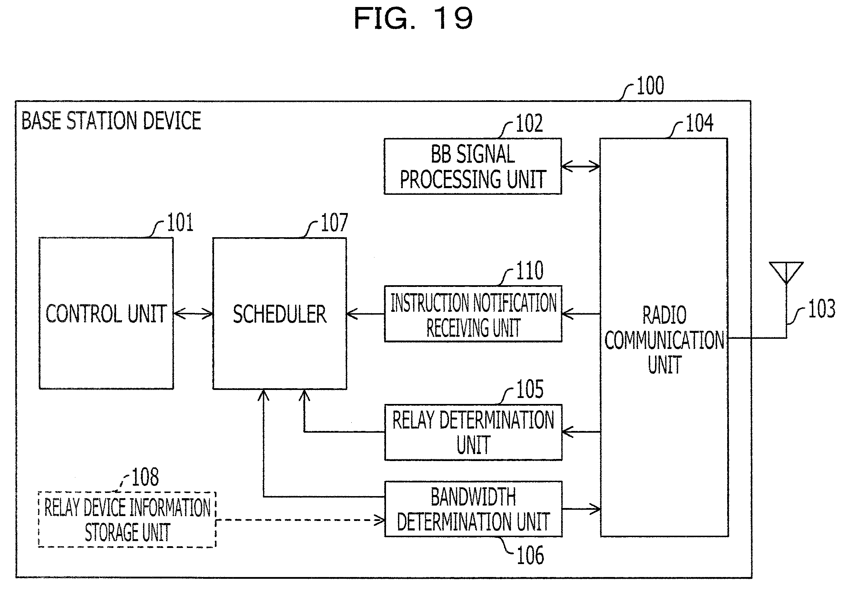

FIG. 19 is a diagram illustrating a configuration example of the base station device 100 illustrated in FIG. 17. The components equivalent to the components illustrated in FIG. 3 are indicated with the numerals used in FIG. 3. The base station device 100 includes an instruction notification receiving unit 110. The instruction notification receiving unit 110 receives a first instruction notification transmitted from the mobile station device 300. The instruction notification receiving unit 110 sends the first instruction notification to the scheduler 107.

Depending on whether the relay by the relay device 200 of the communication between the mobile station device 300 and the base station device 100 is appropriate or not, as indicated by the first instruction notification of the communication by the relay device 200 with the mobile station device 300 and the base station device 100, the scheduler 107 determines whether or not the mobile station device 300 is relayed by the relay device 200. When the mobile station device 300 is relayed by the relay device 200, the scheduler 107 locates the subcarrier that transmits the common subcarrier signal and the subcarrier individually allocated to the mobile station device 300 in the frequency band FB2. When the mobile station device 300 is not relayed by the relay device 200, the scheduler 107 locates the subcarrier individually allocated to the mobile station device 300 in the bandwidth other than the frequency band FB2 that is relayed by the relay device 200.

According to the present embodiment, when the mobile station device 300 may receive the downlink signal from the base station device 100 and the relay device 200, the mobile station device 300 may receive the downlink signal by selectively using a line whose reception quality is high.

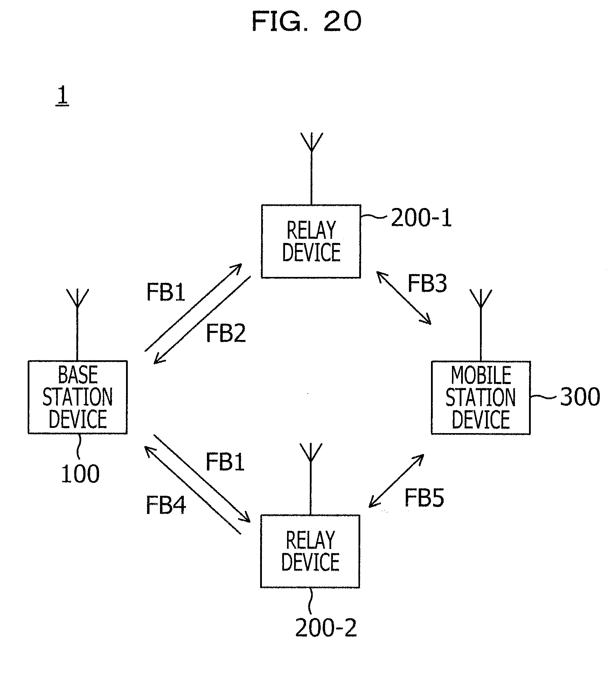

A description will be made of an example of processing to be performed if the mobile station device 300 receives the downlink signals from a plurality of relay devices 200-1 and 200-2. FIG. 20 is a configuration diagram of a fourth embodiment of the radio communication system. The radio communication system 1 includes the base station device 100, the relay devices 200-1 and 200-2, and the mobile station device 300. The relay devices 200-1 and 200-2 may be collectively referred to as a relay device 200. The configurations of the base station device 100, the relay device 200, and the mobile station device 300 may be equivalent to the configurations of the components illustrated in FIG. 17.

The radio communication between the mobile station device in the cover area of the relay device 200-1 and the relay device 200-1 uses the frequency band FB3. On the other hand, the radio communication between the mobile station device in the cover area of the relay device 200-2 and the relay device 200-2 uses the frequency band FB5. The radio communication of the downlink between the relay device 200-1 and the base station device 100 and the radio communication of the downlink between the relay device 200-2 and the base station device 100 use the frequency band FB1.

Out of the OFDMA signals received from the base station device 100, the relay device 200-1 detects mainly the signal of the part of the frequency band FB2, transforms the frequency of the detected signal, and then transmits the detected signal by the frequency band FB3. Out of the OFDMA signals received from the base station device 100, the relay device 200-2 detects mainly the signal of the part of the frequency band FB4, transforms the frequency of the detected signal, and then transmits the detected signal by the frequency band FB5.

The relay device 200-1 transforms the uplink signal transmitted from the mobile station device in the cover area into the frequency band FB2 having the central frequency that is different from the frequency band FB3 during reception, and transmits the uplink signal to the base station device 100. The relay device 200-2 transforms the uplink signal transmitted from the mobile station device in the cover area into the frequency band FB4 having the central frequency that is different from the central frequency of the frequency band FB5, and transmits the uplink signal to the base station device 100. In this manner, the use example of the frequency band of the radio communication system 1 illustrated in FIG. 20 may be equivalent to the use example described with reference to FIG. 15, and FIGs. 16A to 16C.

According to each reception quality of the transmission waves from the relay device 200-1 and the relay device 200-2, the transmission source selecting unit 308 of the mobile station device 300 selects either the relay device 200-1 or the relay device 200-2. The example of a reception quality is described above. For example, the transmission source selecting unit 308 compares the reception qualities of the reception waves from the relay device 200-1 and the relay device 200-2. Among the relay device 200-1 and the relay device 200-2, the transmission source selecting unit 308 selects the relay device that transmits a reception wave whose reception quality is higher.

The instruction notification transmitting unit 309 generates a second instruction notification that instructs the relay device selected by the transmission source selecting unit 308, and transmits the second instruction notification to the base station device 100 by using the radio communication unit 302. The instruction notification receiving unit 110 of the base station device 100 receives the second instruction notification transmitted from the mobile station device 300. The instruction notification receiving unit 110 sends the second instruction notification to the scheduler 107.

According to the second instruction notification, the scheduler 107 determines whether the mobile station device 300 is relayed by the relay device 200-1 or the relay device 200-2. If the mobile station device 300 is relayed by the relay device 200-1, the scheduler 107 locates the subcarrier that transmits the common subcarrier signal and the subcarrier individually allocated to the mobile station device 300 in the frequency band FB2. If the mobile station device 300 is relayed by the relay device 200-2, the scheduler 107 locates the subcarrier that transmits the common subcarrier signal and the subcarrier individually allocated to the mobile station device 300 in the frequency band FB4.

According to the present embodiment, when the mobile station device 300 may receive the downlink signal from either the relay device 200-1 or the relay device 200-2, the mobile station device 300 may receive the downlink signal by selectively using the line whose reception quality is higher.

All examples and conditional language recited herein are intended for pedagogical purposes to aid the reader in understanding the invention and the concepts contributed by the inventor to furthering the art, and are to be construed as being without limitation to such specifically recited examples and conditions. Although the embodiments of the present inventions have been described in detail, it should be understood that the various changes, substitutions, and alterations could be made hereto without departing from the spirit and scope of the invention.

## Claims

1. A relay device comprising:
a first receiving unit which receives an Orthogonal Frequency Division Multiple Access (OFDMA) signal in a first frequency band;
a detection unit which detects, from the OFDMA signal, a signal of a second frequency band that is included in the first frequency band and narrower than the first frequency band;
a frequency transformation unit which transforms the second frequency band of the detected signal into a frequency band that is not included in the second frequency band; and
a first transmitting unit which transmits the detected signal that is transformed by the frequency transformation unit.

2. The relay device according to claim 1, wherein a subcarrier which transmits a prescribed signal previously determined to be transmitted by a common subcarrier among a plurality of mobile station devices and a subcarrier allocated to a mobile station device that is relayed by the relay device are located in the second frequency band.

3. The relay device according to claim 2, comprising a replacement unit which inserts, into a signal transmitted from the first transmitting unit, a subcarrier that transmits a second bandwidth signal indicating a bandwidth of the second frequency band in place of a subcarrier that transmits a first bandwidth signal indicating a bandwidth of the first frequency band.

4. A base station device comprising:
a transmitting unit which transmits, to a relay device, an Orthogonal Frequency Division Multiple Access (OFDMA) signal for a mobile station device which is relayed by the relay device, the relay device including,
a first receiving unit which receives the OFDMA signal,
a detection unit which detects, from the OFDMA signal, a signal of a second frequency band that is included in a first frequency band used by the OFDMA signal and is narrower than the first frequency band,
a frequency transformation unit which transforms the second frequency band of the detected signal into a frequency band that is not included in the second frequency band,
and a first transmitting unit which transmits the detected signal that is transformed by the frequency transformation unit.

5. The base station device according to claim 4, further comprising:
a relay determination unit which determines whether mobile station device is relayed by the relay device; and
a scheduler which allocates, to a subcarrier in the second frequency band,
a prescribed signal which is previously determined to be transmitted by a common subcarrier among a plurality of mobile station devices, and
a signal which is transmitted to the relayed mobile station device by using the subcarrier allocated to each of the plurality of mobile station devices.

6. The base station device according to claim 5,
wherein the scheduler provides a guard band in the second frequency band, and/or
wherein the base station device further comprises a first bandwidth determination unit which determines a bandwidth relayed by the relay device, and wherein the scheduler allocates a signal to the subcarrier in the second frequency band according to the determination result of the relay determination unit and the determination result of the bandwidth determination unit, and/or
wherein the base station device comprises a bandwidth signal adding unit which adds a second bandwidth signal indicating a bandwidth of the second frequency band to the prescribed signal, and/or
wherein the base station device comprises a first instruction notification receiving unit which receives a first instruction notification which instructs whether a relay by the relay device is appropriate, and wherein the relay determination unit determines whether the relay is performed by the relay device according to the first instruction notification.

7. The base station device according to claim 5, wherein the scheduler allocates a frequency band having a different central frequency as the second frequency band to each of a plurality of relay devices which relay a transmission signal of the base station device, and allocates the prescribed signal to each subcarrier in the second frequency band that is allocated to each of the relay devices.

8. The base station device according to claim 7, comprising a second instruction notification receiving unit which receives, from the mobile station device, a second instruction notification that instructs any of the plurality of relay devices, and wherein
the base station device selects the subcarrier in the second frequency band allocated to the relay device instructed by the second instruction notification.

9. A mobile station device comprising:
a receiving unit which receives, from a base station device, an Orthogonal Frequency Division Multiple Access (OFDMA) signal, the OFDMA signal including a signal relayed by a relay device, the relay device including,
a first receiving unit which receives the OFDMA signal,
a detection unit which detects, from the OFDMA signal, a signal of a second frequency band that is included in a first frequency band used by the OFDMA signal and is narrower than the first frequency band,
a frequency transformation unit which transforms the second frequency band of the detected signal into a frequency band that is not included in the second frequency band, and
a first transmitting unit which transmits the detected signal that is transformed by the frequency transformation unit.

10. The mobile station device according to claim 9, comprising:
a frequency determination unit which determines a frequency of another signal, which is relayed by the relay device, according to a frequency of a subcarrier of a known signal included in the OFDMA signal, and/or
a relay detection unit which detects whether the received OFDMA signal is relayed by the relay device, and/or
a first transmission source selecting unit which determines whether the relay by the relay device is appropriate according to a reception quality of a reception wave from the relay device and a reception quality of the reception wave from the base station device; and a first instruction notification transmitting unit which determines whether the relay by the relay device is appropriate according to the reception quality of the reception wave from the relay device and the reception quality of the reception wave from the base station device, and/or
a second transmission source selecting unit which selects one of the plurality of relay devices according to the reception quality of the reception wave from the plurality of relay devices; and a second instruction notification transmitting unit which transmits, to the base station device, a second instruction notification instructing the selected relay device.

11. The mobile station device according to claim 9, comprising:
a bandwidth determination unit which determines a bandwidth of the received OFDMA signal.

12. The mobile station device according to claim 11, comprising:
a notification unit which notifies the base station device of the determined bandwidth of the received OFDMA signal.

13. A relay method for relaying a signal transmitted from a base station device, the relay method comprising:
receiving an Orthogonal Frequency Division Multiple Access (OFDMA) signal from the base station device;
detecting, from the OFDMA signal, a signal of a second frequency band which is included in a first frequency band used by the OFDMA signal and is narrower than a second frequency band;
transforming the second frequency band of the detected signal of the second frequency band into a frequency band which is not included in the second frequency band; and
transmitting a detected signal as transformed.

14. The relay method according to claim 13, wherein the relay method further comprising:
locating a subcarrier which transmits a prescribed signal determined to be transmitted by a subcarrier common to a plurality of mobile station devices and the subcarrier allocated to one of the plurality of mobile station devices that is relayed.

15. The relay method according to claim 14, said relay method comprising:
determining whether the OFDMA signal received by one of the plurality of mobile station devices is relayed by a relay device;
determining a bandwidth of a signal, which is relayed by the relay device out of the OFDMA signal, as a bandwidth of the second frequency band; and
allocating the signal to the subcarrier in the second frequency band according to the determined bandwidth of the signal, and/or said relay method further comprising:
allocating frequency bands having different central frequencies to a plurality of relay devices, including said relay device, which relay a transmission signal from the base station device; and
allocating the prescribed signal to each of the subcarriers in the second frequency band allocated to each of the plurality of relay devices.
